# EUROPÄISCHE PATENTSCHRIFT

(11) **EP 0 700 950 B1**
(45) Veröffentlichungstag und Bekanntmachung des Hinweises auf die Patenterteilung: **06.11.2002**
(21) Anmeldenummer: 95112628.3
(22) Anmeldetag: 11.08.1995
(51) Int. Cl.: C08G 69/10, C08G 73/06, C11D 3/37, C02F 5/12, C08G 69/48

(54) **Sulfonsäuregruppen enthaltende Polyasparaginsäurederivate, ihre Verwendung und Herstellung**
Sulfonic mortises containing polyaspartic acid derivates, their use and their preparation
Dérivés d'acide polyaspartique contenant des groupes sulfoniques, leur application, leur préparation

(30) Priorität: 24.08.1994 DE 4429976
(43) Veröffentlichungstag der Anmeldung: 13.03.1996
(73) Patentinhaber: BAYER AG, 51368 Leverkusen (DE)
(72) Erfinder: Uhr, Hermann, Dr., D-47800 Krefeld (DE); Heuer, Lutz, Dr., D-47800 Krefeld (DE); Groth, Torsten, Dr., D-51061 Köln (DE); Joentgen, Winfried, Dr., D-50769 Köln (DE); Kleinstück, Roland, Dr., D-51467 Bergisch Gladbach (DE)

(56) Entgegenhaltungen:
- EP-A- 0 256 366
- EP-A- 0 454 126
- WO-A-92/14753
- WO-A-92/16462
- WO-A-92/16463
- WO-A-94/01486

## Beschreibung

Die Erfindung betrifft teilweise neue, Sulfonsäuregruppen enthaltende Polyasparaginsäurederivate, ihre Herstellung und Verwendung.

Bei der Nutzung von natürlichen Wässern für industrielle Zwecke, z.B. als Kühlwässer, als Prozeßwasser oder auch in industriellen Reinigungsverfahren, wird das eingesetzte Wasser physikalisch und/oder chemisch gezielt oder auch unbeabsichtigt verändert. So sind z.B. in offenen Umlaufkühlsystemen Temperaturveränderungen. Eindickung sowie eine pH-Erhöhung, die durch den Kohlendioxidaustrag im Kühlturm bewirkt wird, unvermeidbar. Bei der industriellen Reinigung, z.B. in der Lebensmittelindustrie, ist in vielen Anwendungen der Einsatz von Alkali, meist Natronlauge, in den Reinigerlösungen notwendig.

Sowohl durch Eindickung und pH-Erhöhung über CO₂-Austrag wie auch durch Natronlaugezusatz steigt die Konzentration an Härtebildnern, insbesondere Calcium- und Carbonationen, an. Wenn sich die natürlichen Wässer vor Einsatz im Gleichgewicht befanden (Kalk-Kohlensäure-Gleichgewicht), so führt ein Anstieg der Konzentration der Härtebildner zu einer Übersättigung. Zur Verhinderung von Wassersteinablagerungen (Inkrustationen), z.B. auf Wärmeübertragungsflächen oder dem zu reinigenden Gut, ist dann der Zusatz von Additiven ("Steininhibitoren") nötig.

Ähnlich ist die Situation bei der Sekundärförderung im Erdölbereich:
Die eingesetzten Einpreßwässer müssen u.U. durch Additivzusatz behandelt werden, um eine Abscheidung von anorganischen Salzen wie Calciumcarbonat sowie Calcium-, Strontium-, Bariumsulfat in der Formation und eine dadurch resultierende Behinderung des Ölflusses zu unterbinden.

Ein weiterer, zum Teil sogar der überwiegende Zweck des Additiveinsatzes bei der Wasserbehandlung ist der Schutz metallischer Werkstoffe vor Korrosion. Zum Beispiel ist bei Verwendung unlegierter Kohlenstoffstähle in offenen Umlaufkühlsystemen eine ausreichende Korrosionsinhibierung erwünscht, da die in solchen Systemen herrschenden Bedingungen (Sauerstoffsättigung, Salzanreicherung) zu einer Beschleunigung der Korrosion führen.

Die nach dem Stand der Technik eingesetzten Wasserbehandlungsmittel und alkalischen Reiniger bedürfen weiterer Verbesserungen:

Polyphosphate haben nur eine begrenzte Löslichkeit, so daß die Herstellung hochkonzentrierter Formulierungen beschränkt ist, und sind außerdem hydrolytisch instabil. Weiterhin wird ihr relativ hoher Phosphorgehalt bemängelt.

Phosphonate vom Typ Amino-tris-methylenphosphonsäure und 1-Hydroxy-ethan-1,1-diphosphonsäure sind gegenüber Polyphosphaten die technisch fortgeschrittenen Produkte. Sie zeigen eine gute Hydrolysestabilität sowie eine gute Wirksamkeit als Steininhibitoren. Dadurch können diese Produkte meist in geringeren Konzentrationen eingesetzt werden. Entsprechend niedriger im Vergleich zu Polyphosphateinsatz sind die Phosphorkonzentrationen in den behandelten Wässern.

2-Phosphono-butan-1,2,4-tricarbonsäure weist gegenüber den anderen Phosphonaten eine noch weiter verbesserte steininhibierende Wirksamkeit bei wesentlich erhöhter Stabilität gegenüber Hypochlorit und Hypobromit bzw. Chlor und Brom, die als Biozide und Desinfektionsmittel eingesetzt werden, auf. Der Phosphorgehalt dieses Produktes ist im Vergleich zu den anderen Phosphonaten erheblich reduziert.

Polycarbonsäuren wie z.B. Polyacrylate oder auch Copolymere auf der Basis von Acrylsäure sowie andere Polycarbonsäuren mit C-C-Ketten sind meist Phosphorfreie Produkte, haben aber den Nachteil der für viele Einsatzbereiche ungenügenden korrosions- und steininhibierenden Wirksamkeit.

Auch spezielle, Sulfonsäuregruppen enthaltende Polymere wurden bereits beschrieben. So ist es aus US-A-3 928 196 bekannt, daß man Copolymere aus 2-Acrylamido-2-methylpropylsulfonsäuren und Acrylsäure zur Verhinderung der Ablagerung von schwerlöslichen anorganischen Verbindungen ("Scale") nutzen kann.

Desweiteren sind Vinylpolymere bekannt (US-A-5 049 310), die kleinere Anteile an Sulfonsäuregruppen enthalten und die in Zinksalz enthaltenden Korrosionsinhibitoren eingesetzt werden. Sie dienen dort überwiegend zur Verhinderung der Ausfällung von schwerlöslichen Zinkverbindungen, z.B. von Zinkhydroxid bei erhöhten Kühlwasser-pH-Werten.

Allen bisher genannten organischen Verbindungen ist eine nur geringe biologische Abbaubarkeit gemeinsam. Diese ist häufig eine Voraussetzung für ihren Einsatz, z.B. würde die Verwendung biologisch leicht abbaubarer Additive in offenen Umlaufkühlsystemen wegen der in solchen Systemen herrschenden Bedingungen zum Abbau der Additive noch im System führen. In anderen Anwendungen z.B. mit sehr geringen Verweilzeiten im System könnte dagegen eine leichte biologische Abbaubarkeit weniger störend wirken.

Vorteilhaft ist eine biologisch leichte Abbaubarkeit in jedem Falle, wenn die Additive - was häufig geschieht - nach Gebrauch in den Vorfluter gelangen.

Daher ist die Entwicklung biologisch leicht bzw. leichter abbaubarer Additive für die Wasserbehandlung und für den Einsatz in alkalischen Reinigern ein technisch und ökologisch sinnvolles Ziel.

Ein erster Schritt dazu wurde durch die Entwicklung der Polycarbonsäure, Polyasparaginsäure (PAS) gemacht, siehe US-A-4 534 881, 4 839 461, insbesondere Spalte 2, Zeile 23 ff., US-A-5 116 513 und US-A-5 152 902.

Auch bei Waschmittelzusätzen ist es wünschenswert, daß diese biologisch abbaubar sind. Bereits aus EP-A-256 366 (= US-A-4 839 461, vgl. Spalte 2, Zeile 23 ff.) ist bekannt, Polyasparaginsäure als Waschmittelzusatz einzusetzen.

Aus der EP 0 454 126 sind Polyaminosäuren, insbesondere Polyasparaginsäure oder Polyglutaminsäure bekannt, die als Builder und/oder Cobuilder in Waschmitteln einsetzbar sind und biologisch abbaubar sein sollen.

Desweiteren sind modifizierte Polyasparaginsäuren bekannt, die als Zusatz zu Wasch- und Reinigungsmitteln, sowie zur Wasserbehandlung geeignet sind (DE-A-4 221 875). Trotz biologischer Abbaubarkeit ist die Wirkung der obengenannten Verbindungen in Waschmitteln häufig noch nicht voll zufriedenstellend.

Aus der DE-A-2 253 190 sind Tenside bekannt, die durch Reaktion von Polyaspartimiden mit langkettigen Aminen entstanden.

Außerdem sind bereits bestimmte Polyasparaginsäurederivate gefunden worden, die Mercapto- und Sulfonsäuregruppen enthalten und zur Verwendung in kosmetischen Zubereitungen, besonders Haarshampoos geeignet sind (US-A-4 363 797).

Der Erfindung liegt die Aufgabe zugrunde, verbesserte biologisch abbaubare Polymere aufzufinden, die insbesondere zur Wasserbehandlung und als Waschmittelzusatz geeignet sind.

Die Erfindung betrifft Polymere mit wiederkehrenden Aspartyl-Einheiten der Struktur 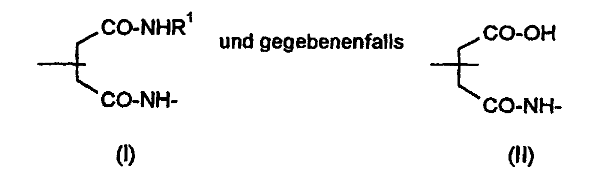 mit
- R¹ =: 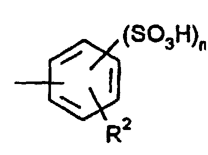 oder -Y-SO₃H
- n =: 1 oder 2
- Y =: geradkettiges oder verzweigtes Alkyl, Alkenyl oder Alkinyl,
- R² =: H, Alkyl, Alkoxy oder Halogen
oder ein Salz davon, wobei für den Fall, das R¹ = -CH₂-CH₂-SO₃H oder ein Salz davon ist, das molare Verhältnis der Strukturen II/I größer als 1 ist.

In einer bevorzugten Ausführungsform beträgt die Summe der Einheiten I und II von 10 bis 1000, insbesondere von 10 bis 300. Die wiederkehrenden Einheiten sind bevorzugt statistisch verteilt und können über α- oder β-Bindungen miteinander verknüpft sein. Die α- und β-Einheiten der Strukturen I und II sind im folgenden wiedergegeben, selbstverständlich kann es sich auch um die Salze dieser Strukturen handeln:

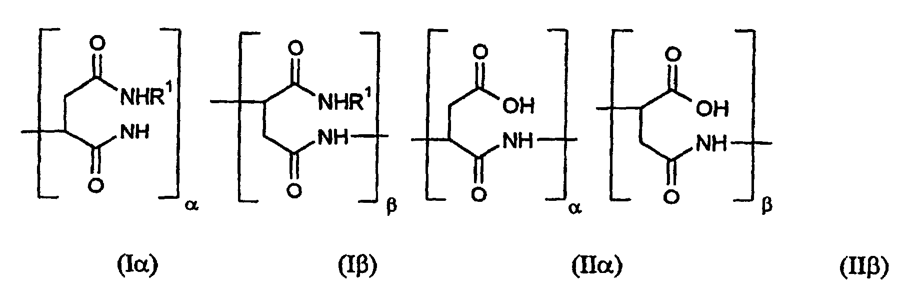

In einer bevorzugten Ausführungsform liegen wenigstens 50 %, insbesondere wenigstens 70 % der wiederkehrenden Strukturen (I) und (II) über β-Verknüpfungen vor.

In einer bevorzugten Ausführungsförm gemäß der vorliegenden Erfindung bedeutet
- R¹ =: -Y-SO₃H,
wobei
- Y: Methylen, Alkenyl, Alkinyl oder Alkyl mit wenigstens 3 C-Atomen bedeutet.

In einer bevorzugten Ausführungsform liegt das molare Verhältnis der wiederkehrenden Einheiten (I) zu (II) zwischen 0,1:99,9 und 100:9.

Die Endgruppen der erfindungsgemäßen Verbindungen können je nach Herstellung in einem weiten Bereich variieren, mögliche Endgruppen sind beispielsweise

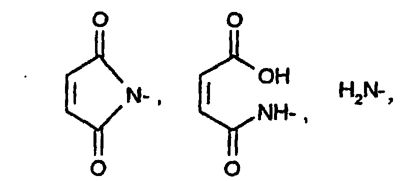

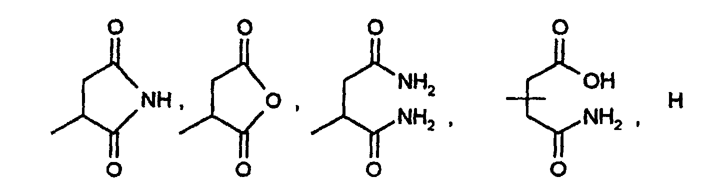

Zusätzlich können weitere wiederkehrende Einheiten enthalten sein.

Besonders bevorzugt sind Polyasparaginsäurederivate der allgemeinen Formel (I), in welcher
- R¹: für -Y-SO₃H steht, oder für entsprechende Na⁺-, K⁺-, NH₄⁺-Salze,
- R²: für H, Alkyl mit 1 bis 6 Kohlenstoffatomen, welches gegebenenfalls substituiert ist durch 1 bis 5 Halogenatome, Alkoxy, welches im Alkylteil aus 1 bis 6 Kohlenstoffatomen besteht, welches gegebenenfalls mit 1 bis 5 Halogenatomen substituiert oder für Halogen steht, und
- Y: für geradkettiges oder verzweigtes Alkyl mit 1 bis 10 C-Atomen, geradkettiges oder verzweigtes Alkenyl oder Alkinyl mit 2 bis 10 Kohlenstoffatomen steht, und
- n: für 1 oder 2 steht.

Weitere bevorzugte wiederkehrende Einheiten, die in den erfindungsgemäßen Verbindungen enthalten sein können, sind beispielsweise
a) Äpfelsäureeinheiten wie 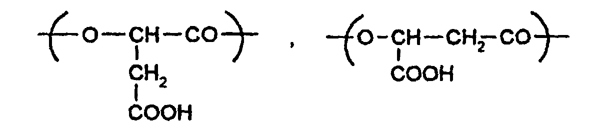
b) Maleinsäureeinheiten wie 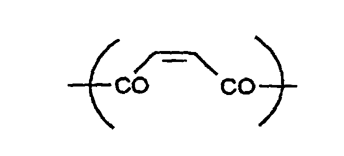 oder
c) Fumarsäureeinheiten wie

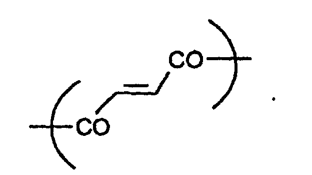

Ganz besonders bevorzugt sind Polyasparaginsäurederivate, in welcher
- R¹: für 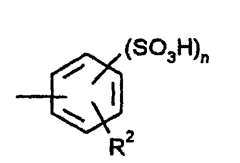 oder -Y-SO₃H, oder für entsprechende Na⁺-, K⁺-, NH₄⁺-Salze steht,
- R²: für H, Alkyl mit 1 bis 4 Kohlenstoffatomen, welches gegebenenfalls substituiert ist durch 1 bis 3 Fluor und/oder Chloratome, Alkoxy, welches im Alkylteil aus 1 bis 4 Kohlenstoffatomen besteht, welches gegebenenfalls mit 1 bis 3 Fluor und/oder Chloratomen substituiert ist, oder Fluor oder Chlor, steht, und
- Y: für geradkettiges oder verzweigtes Alkyl mit 1 bis 8 Kohlenstoffatomen, geradkettiges oder verzweigtes Alkenyl oder Alkinyl mit 2 bis 8 Kohlenstoffatomen steht und
- n: für 1 und 2 steht.

Man erhält die erfindungsgemäßen Polyasparaginsäurederivate der allgemeinen Formel (I), wenn man zunächst Polysuccinimid mit einem Amin der Formel H₂N-R¹, insbesondere 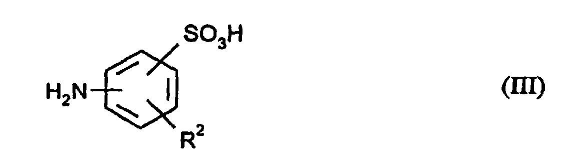 oder

H₂N-Y-SO₃H (IV)

worin Y, n und R² die oben angegebene Bedeutung haben,
gegebenenfalls in Gegenwart von Basen und gegebenenfalls in Gegenwart von Verdünnungsmitteln zu Polyasparaginsäurederivaten mit wiederkehrenden Einheiten der Struktur (I), gegebenenfalls der Struktur (II) und wiederkehrende Polysuccinimideinheiten umsetzt und dann die noch nicht durch Amine geöffneten Succinimideinheiten mit Basen, gegebenenfalls in Gegenwart von Verdünnungsmitteln öffnet.

Die beiden Teilschritte können sowohl mit Isolierung der oben beschriebenen Zwischenstufe erfolgen, sowie auch ohne Isolierung der Zwischenstufe als "Eintopfreaktion".

Die Reaktionstemperaturen für den ersten Teilschritt können in einem breiten Bereich variiert werden. Im allgemeinen arbeitet man bei Temperaturen zwischen 0°C und 250°C, im besonderen bei Temperaturen zwischen 10°C und 120°C.

Als gegebenenfalls verwendete Verdünnungsmittel kommen alle Verdünnungsmittel in Frage, die nicht selbst mit dem Polysuccinimid reagieren. Im allgemeinen verwendet man Kohlenwasserstoffe wie Toluol, Xylol oder Hexan; chlorierte Kohlenwasserstoffe wie Chlorbenzol oder Chloroform; Ketone wie Aceton; Ether wie Tetrahydrofuran, Diethylether, Methyl-tert-butylether oder Dioxan; Nitrile wie Acetonitril; Dimethylformamid, N-Methylpyrrolidon, Dimethylsulfoxid, Sulfolan oder Nitromethan. Ganz besonders bevorzugt verwendet man Acetonitril, Aceton, Dioxan, Dimethylformamid, N-Methylpyrrolidon, Dimethylsulfoxid, Sulfolan oder Nitromethan. Besonders bevorzugt sind davon dipolar aprotische Lösungsmittel.

Die Umsetzungen können gegebenenfalls in Gegenwart von Basen durchgeführt werden. Hierbei können alle üblichen Basen verwendet werden. Hierzu gehören vorzugsweise tertiäre Amine wie Triethylamin und Pyridin, Alkalihydroxide wie Natrium- und Kaliumhydroxid und Alkalicarbonate und -hydrogencarbonate wie Kaliumcarbonat und Natriumhydrogencarbonat.

Die Reaktionstemperaturen für den zweiten Teilschritt können ebenfalls in einem breiten Bereich variiert werden. Im allgemeinen arbeitet man bei Temperaturen zwischen 0°C und 120°C im besonderen bei Temperaturen zwischen 10°C und 80°C.

Als gegebenenfalls verwendete Verdünnungsmittel kommen die Verdünnungsmittel in Frage, die bereits für den ersten Teilschritt genannt sind, sowie auch Wasser, Alkohole wie Methanol, Ethanol, Isopropanol oder Butanol.

Die zum Öffnen der Succinimideinheiten verwendeten Basen bestehen entweder aus Alkalimetallhydroxiden wie Natriumhydroxid, Kaliumhydroxid oder Lithiumhydroxid, Alkalimetallcarbonaten oder -hydrogencarbonaten wie Kaliumcarbonat, Natriumcarbonat, Kaliumhydrogencarbonat oder Natriumhydrogencarbonat oder wäßrigem Ammoniak.

Sowohl für den ersten, wie auch den zweiten Teilschritt kann eine gegebenenfalls stattfindende Isolierung auf vielfältige Weise erfolgen. Hierbei dampft man das verwendete Verdünnungsmittel entweder ein oder man fällt das Reaktionsprodukt durch Einrühren in Lösungsmittel, in denen das Produkt entweder schlecht oder überhaupt nicht löslich ist und saugt ab. In vielen Fällen kann auch direkt aus der Reaktionsmischung heraus abgesaugt werden.

Die eingesetzten Polysuccinimide sind bekannt und können auf vielfältige Weise hergestellt werden. Beispielhaft genannt seien hier:
Die thermische Polykondensation von Asparaginsäure zu Polysuccinimid, die beispielsweise in J. Org. Chem. 26, 1084 (1961); DE-A 2 253 190 und EP 0 578 449 beschrieben ist. Weiterhin können Polysuccinimide mit unterschiedlichen Molekulargewichtsverteilungen auch durch Polykondensation von Asparaginsäure in Gegenwart von Säuren und wasserentziehenden Verbindungen, beispielsweise Phosphorsäure, hergestellt werden, wie aus J. Med. Chem. 16, 893 (1973) und DE 4 023 463 bekannt ist. Ebenso ist es möglich Polysuccinimid in einem zweistufigen Prozeß aus Maleinsäure oder Derivaten davon wie beispielsweise Maleinsäureanhydrid und Ammoniak über die Zwischenprodukte Maleinsäuremonoammoniumsalz, Maleinamidsäure herzustellen. Außerdem kann auch das Monoammoniumsalz der Äpfelsäure thermisch in Polysuccinimid überführt werden. Bekannt sind diese vorgenannten Herstellverfahren beispielsweise aus J. Org. Chem. 24, 1662 (1959), DE-A 2 253 190 und DE 3 626 672. Eine weitere Methode der Herstellung von Polysuccinimid besteht in der basenkatalysierten anionischen Polymerisation von Maleinsäureimid wie sie z.B. in JP 44-4394 (1969) beschrieben wird.

Die Erfindung betrifft weiterhin die Verwendung von Polymeren mit wiederkehrenden Aspartyl-Einheiten der Strukturen I und II 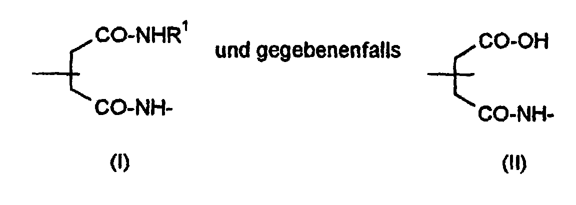 mit
- R¹ =: 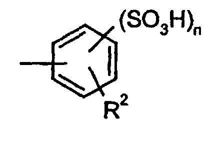 oder -Y-SO₃H
- n =: 1 oder 2
- Y =: geradkettiges oder verzweigtes Alkyl, Alkenyl oder Alkinyl,
- R² =: H, Alkyl, Alkoxy oder Halogen
in Wasch- und Wasserbehandlungsverfahren sowie entsprechende Waschmittel und Wasserbehandlungsmittel. Hierbei sind die bevorzugten Bedeutungen für die Substituenten, Molekulargewichte, α/β-Verhältnisse usw. ebenso wie bei den erfindungsgemäßen neuen Polymeren.

Die Polyasparaginsäurederivate können als Zusatz zu phosphatarmen oder phosphatfreien Wasch- und Reinigungsmitteln eingesetzt werden. Die eingesetzte Menge an Polyasparaginsäurederivaten beträgt 0,1 bis 30 Gew.-% bezogen auf die Wasch und Reinigungsmittel. Unter phosphatarmen Waschmitteln werden solche Formulierungen verstanden, die nicht mehr als 25 Gew.-% Phosphat, berechnet als Natriumtriphosphat, enthalten. Phosphatfreie Waschmittel enthalten im allgemeinen Natriumaluminiumsilikat. Die Polyasparaginsäurederivate der allgemeinen Formel (I) werden in Mengen von 0,5 bis 15 Gew.-%, bezogen auf die Wasserbehandlungsmittel eingesetzt. Die oben beschriebenen Polyasparaginsäurederivate besitzen in der Waschmittelflotte ein gutes Dispergiervermögen für Partikelschmutz. Die Polyasparaginsäurederivate sind Builder und/oder Co-Builder für Waschmittel und bewirken während des Waschvorgangs eine Reduktion der Umkrustierung und der Vergrauung auf dem gewaschenen Textilgut. Sie sind somit auch als Inkrustations- und Vergrauungsinhibitor geeignet.

Außerdem ist es auch möglich, daß gegebenenfalls noch Alkalisilikate enthalten sind. Als Alkalisilikate kommen beispielsweise amorphe Natriumdisilikate, kristalline Schichtsilikate, Natriumsilikate, die durch Entwässern von Natriumsilikatlösung entstehen, sowie Natriumaluminiumsilikat (Zeolith A) in Frage. Sie können bis zu 50 Gew.-% zusätzlich enthalten sein.

Die Waschmittel können gegebenenfalls noch ein Bleichmittel enthalten, z.B. Natriumperborat, das im Falle seines Einsatzes in Mengen bis zu 30 Gew.-% in der Waschmittelformulierung enthalten sein kann. Gegebenenfalls können noch weitere Zusätze enthalten sein, beispielsweise Komplexbildner, Citrate, Trübungsmittel, optische Aufheller, Enzyme, Parfümöle, Vergrauungsinhibitoren, Bleichaktivatoren und/oder Farbübertragungsinhibitoren.

Die Polyasparaginsäurederivate sind sowohl in flüssigen, als auch festen Waschmittelformulierungen mit den oben angegebenen, gegebenenfalls enthaltenen Komponenten, lagerstabil.

Bei Verwendung der Polyasparaginsäurederivate zur Wasserbehandlung können die Verbindungen als Steininhibitoren (scale inhibitor) wie auch als Korrosionsinhibitoren verwendet werden. Einsatzgebiete solcher Mittel können z.B. sein: Wasserbehandlung (z.B. Behandlung von Kühlwässern, Prozeßwässern, Gaswaschwässern, Einpreßwässern bei der sekundären Ölförderung und Wasserbehandlung im Bergbau) sowie industrielle und institutionelle Reinigeranwendungen (z.B. Behälter- und Gerätereinigung in der Lebensmittelindustrie, Flaschenreinigung, für institutionelle Geschirreiniger und Waschmittel).

Aufgrund des Wirkprofils zur Wasserbehandlung eignen sich die Polyasparaginsäurederivate nicht nur für technische Anwendungen in der Wasserbehandlung, sondern auch zur Verhinderung der Abscheidung oder Entfernung von mineralischen Ablagerungen von Zahnbelägen (Plaque). Die Polyasparaginsäurederivate können alleine oder in Mischung in diverse Zahnreinigungs- oder -behandlungsmittel eingesetzt werden. Beispielhaft genannt sind hier Mundwässer, abrasive und nicht abrasive Zahncrems, Zahnreiniger, Zahnseiden, Kaugummis, Mittel zur Reinigung von Zahnersatz (3. Zähne).

Die Polyasparaginsäurederivate können auch in Kombination mit einer oder mehreren Substanzen, die sich für den jeweiligen Einsatzzweck als nützlich erwiesen haben, eingesetzt werden. Beispiele für solche Komponenten durch deren Zumischung häufig auch synergistische Wirkungen erzielt werden sollen, sind: Phosphonsäuren, z.B. Phosphonocarbonsäuren, insbesondere Phosphonobernsteinsäure, Phosphonopropionsäure und vor allem 2-Phosphonobutan-1,2,4-tricarbonsäure (Bayhibit® AM). Weitere geeignete Phosphonsäuren sind beispielsweise derartige, die eine Amino- oder Hydroxyfunktion aufweisen, insbesondere Nitrilo-tris-methylenphosphonsäure sowie die höheren Analoga wie z.B. Ethylendiamintetrakis(methylenphosphonsäure) und Diethylentriaminpentakis-(methylenphosphonsäure) sowie ihre N-Oxide; 1-Hydroxyethan-1,1-diphosphonsäure, Hydroxyphosphonoessigsäure. Weiterhin geeignete und synergistisch wirksame Zumischpartner sind die Aminosulfonsäuren der Formel III und IV sowie ihre Salze.

Weitere potentielle Komponenten in Formulierungen mit den erfindungsgemäßen Produkten der allgemeinen Formel (I) sind:
Zinksalze, Molybdate, Borate, Silikate, Azole (z.B. Tolyl- oder Benzotriazol), weitere Phosphonsäuren, Polymere und Copolymere auf Basis der Acrylsäure, der Methacrylsäure, der Maleinsäure, Ligninsulfonate, Tannine, Phosphate, Komplexbildner, Citronensäure, Weinsäure, Gluconsäure, Tenside, Biozide, Desinfektionsmittel.

Für den Fachmann ist es dabei selbstverständlich, daß an Stelle von Säuren (z.B. "Phosphonsäuren") auch deren Salze ("Phosphonate") und umgekehrt eingesetzt werden können.

Die vorliegende Erfindung betrifft weiterhin ein Verfahren zur Wasserbehandlung, welches dadurch gekennzeichnet ist, daß man das erfindungsgemäße Mittel in das zu behandelnde Wasser einträgt.

Weiterhin betrifft die vorliegende Erfindung ein Verfahren zur alkalischen Reinigung, dadurch gekennzeichnet, daß man als Inkrustationsinhibitor/Sequestriermittel das erfindungsgemäße Mittel einsetzt.

Das Verfahren zur Wasserbehandlung soll im folgenden an Beispielen erläutert werden:

Z.B. werden die erfindungsgemäßen Mittel zur Verhinderung von Ablagerungen und Belägen beim Einsatz in Kühlsystemen mit Frischwasserkühlung dem einlaufenden Wasser in Konzentrationen zwischen etwa 0,1 und 10 mg/l Wirkstoff zugesetzt.

In Kühlkreisläufen erfolgt die Dosierung der Additive zum Stein- und/oder Korrosionsschutz häufig mengenabhängig bezogen auf das Zusatzwasser. Die Konzentrationen liegen zwischen etwa 1 und 50 mg/l Wirkstoff im umlaufenden Kühlwasser.

Bei der destillativen Meerwaserentsalzung in MSF (multi stage flash) und VP-(vapour compression)Anlagen werden durch Additivzusätze von etwa 1 bis 5 mg/l Wirkstoffe zum zulaufenden Meerwasser Verkrustungen der Wärmetauscheroberflächen verhindert.

Die erforderlichen Dosierungen bei RO (reverse osmose)-Anlagen liegen wegen der verfahrensbedingten niedrigeren maximalen Temperaturen im allgemeinen deutlich niedriger.

Das Verfahren zum Einsatz der erfindungsgemäßen Mittel bei der alkalischen Reinigung wird wie folgt erläutert:

Die zur Inkrustationsinhibierung und Sequestrierung bei der alkalischen Reinigung eingesetzten Wirkstoffkonzentrationen richten sich insbesondere nach den technischen und physikalischen Bedingungen wie z.B. pH-Werten, Verweilzeiten, Temperaturen, Wasserhärten.

Während im schwächer alkalischen Bereich (pH bis etwa 10) bei Temperaturen unter 60°C und kürzeren Verweilzeiten Wirkstoffkonzentrationen von deutlich unter 100 mg/l, im allgemeinen 5 bis 80 mg/l, häufig ausreichend sind, werden bei höheren Alkalikonzentrationen und Temperaturen Dosierungen von z.T. über 100 mg/l bis 300 mg/l erforderlich.

### Herstellungsbeispiele

### Herstellung der Zwischenprodukte (Umsatz Amin mit Polysuccinimid)

### Beispiel III-1

10 g Polysuccinimid werden in DMF gelöst und bei Raumtemperatur mit einer Lösung von 5,72 g Aminomethylsulfonsäure gelöst in wenig DMF versetzt. Man rührt 24 h bei Raumtemperatur nach und fällt das Produkt durch Einrühren in Butanol aus. Nach Absaugen wird der Rückstand mit Aceton und Ether gewaschen und anschließend 24 h bei 50°C im Vakuumtrockenschrank getrocknet.
Ausbeute: 15,3 g eines beigen Feststoffes.

Analog wurden die in Tabelle 1 genannten Amine umgesetzt.

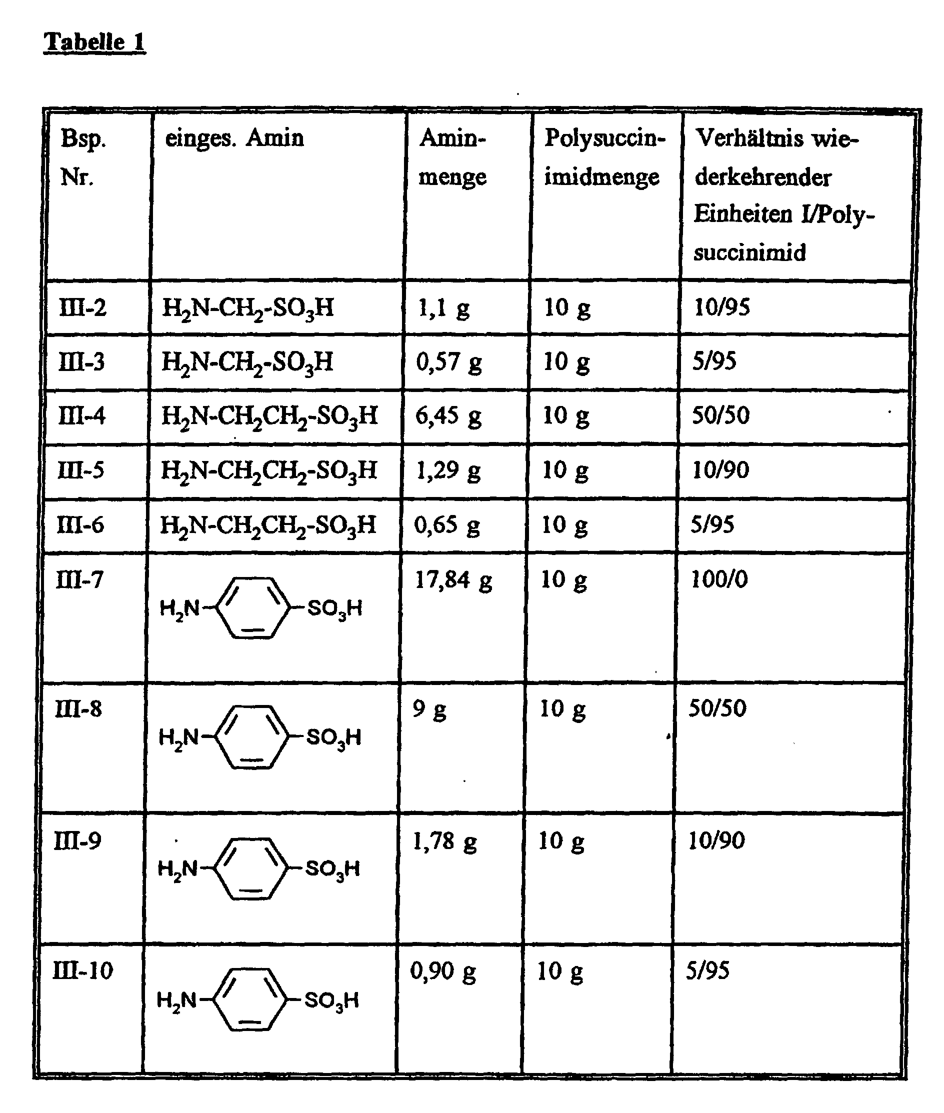

### Herstellung der Polyasparaginsäurederivate der Formel (I)

### Beispiel I-1

10,7 g des in Beispiel III-1 hergestellten Umsetzungsproduktes wird vorgelegt und mit 70 ml N NaOH 3 h bei 50°C gerührt. Nach dem Abkühlen rührt man in Isopropanol ein, dekantiert vom Lösungsmittel ab, verrührt 2 x mit Aceton und saugt den Feststoff ab. Es wird 24 h bei 50°C im Vakuumtrockenschrank getrocknet.
Ausbeute: 12 g eines beigen Feststoffes
Analyse: C: 27,7 %, H: 3,87 %, N: 9,91 %, S: 7,5 %

Analog wurden auch die in Tabelle 1 genannten Produkte umgesetzt (siehe Tabelle 2).

**Tabelle 2**

| Bsp. Nr. | Ausgangsmaterial | Elementaranalyse |
|---|---|---|
| I-2 | III-2 | C: 30,4 %, H: 3,78 %, N: 8,21 %, S: 1,8 % |
| I-3 | III-3 | C: 30,5 %, H: 3,84 %, N: 8,11 % |
| I-4 | III-4 | C: 28,9 %, H: 4,47 %, N: 9,73 %, S: 7,1 % |
| I-5 | III-5 | S: 0,8 % |
| I-6 | III-6 | C: 28,8 %, H: 3,64 %, N: 7,90 %, S: 0,5 % |
| I-7 | III-7 | C: 44,1 %, H: 3,8 %, N: 10,2 %, S: 12,4 % |
| I-8 | III-8 | C: 37,8 %, H: 3,78 %, N: 9,39 %, S: 7,2 % |
| I-9 | III-9 | C: 31,6 %, H: 4,07 %, N: 8,5 %, S: 0,2 % |
| I-10 | III-10 | C: 30,9 %, H: 4,06 %, N: 8,2 %, S: 0,12 % |

### Anwendungsbeispiele

Die Prüfung der erfindungsgemäßen Verbindungen, des Anwendungsbeispiele und der Mischung wurden gemäß Tenside, Surfactans und Detergents, 24, 213-216 (1987) durchgeführt. Als Absetzbeispiel des Standes der Technik wurde Polyasparaginsäure-Na-Salz verwendet.

| | CCDK I in mg/g | CCDK II in mg/g | Einwaage |
|---|---|---|---|
| Verbindung I-5 (Tab. 2) | 124,8 | 40,5 | 1 g |
| Polyasparaginsäure-Na-Salz | 112,3 | 35,1 | 1 g |
| Taurin-Na-Salz | 19,9 | 20,1 | 1 g |
| Taurin-Na-Salz/Polyasparaginsäure-Na-Salz = 10:90 | 99,3 | 37,6 | 1 g |
| CCDK = Calciumcarbonatdispergierkapazität | | | |

## Patentansprüche

1. Polymere enthaltend wiederkehrende Aspartyl-Einheiten der Struktur 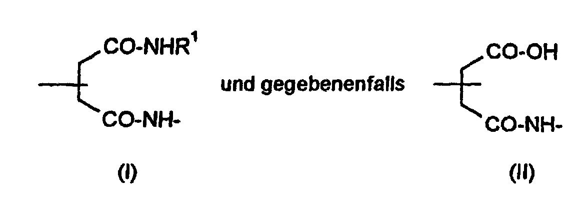 mit
R¹ = 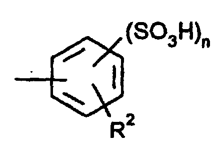 oder -Y-SO₃H
n = 1 oder 2
Y = geradkettiges oder verzweigtes Alkyl, Alkenyl oder Alkinyl,
R² = H, Alkyl, Alkoxy oder Halogen
oder ein Salz davon, wobei für den Fall, daß R¹ = -CH₂-CH₂-SO₃H oder ein Salz davon ist, das molare Verhältnis der Strukturen II/I größer als 1 ist.

2. Polymere gemäß Anspruch 1, **dadurch gekennzeichnet, daß**
R¹ = 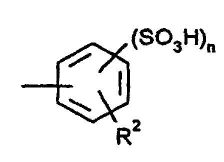 bedeutet.

3. Polymere gemäß Anspruch 1, **dadurch gekennzeichnet, daß**
R¹ = -Y-SO₃H,
wobei Y Methylen, Alkenyl, Alkinyl oder Alkyl mit wenigstens 3 C-Atomen bedeutet.

4. Polymere gemäß wenigstens einem der vorhergehenden Ansprüche, **dadurch gekennzeichnet, daß** die wiederkehrenden Einheiten (I) und (II) zu wenigstens 50 % als β-Einheiten vorliegen.

5. Polymere gemäß wenigstens einem der vorhergehenden Ansprüche, **dadurch gekennzeichnet, daß** das molare Verhältnis der wiederkehrenden Einheiten (I) zu (II) zwischen 0,1:99,9 und 100:0 liegt.

6. Polymere gemäß wenigstens einem der vorhergehenden Ansprüche, **dadurch gekennzeichnet, daß** die Summe der Einheiten I und II 10 bis 1 000 beträgt.

7. Zusammensetzung, die zur Wasserbehandlung oder als Waschmittelzusatz geeignet ist und ein Polyasparaginsäurederivat enthält, wobei das Derivat wiederkehrende Aspartyl-Einheiten der Strukturen (I) und gegebenenfalls (II) enthält 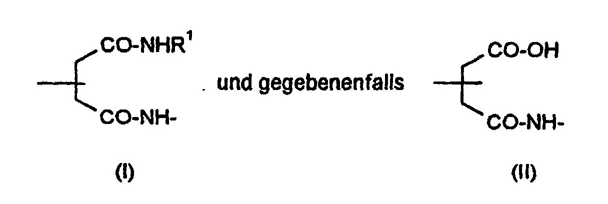 mit
R¹ = 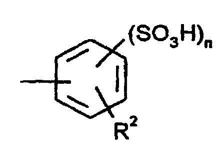 oder -Y-SO₃H
n = 1 oder 2
Y = geradkettiges oder verzweigtes Alkyl, Alkenyl oder Alkinyl,
R² = H, Alkyl, Alkoxy oder Halogen.

8. Wasch- und Reinigungsmittel enthaltend zu 0,1 bis 3,0 Gew.-% ein Polymer mit wiederkehrenden Einheiten der Formeln 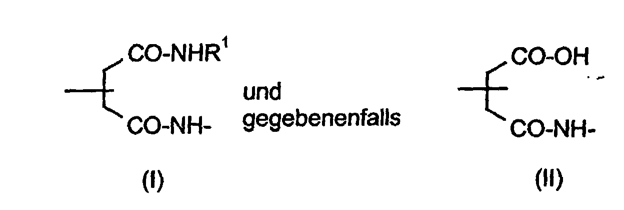 mit
R¹ = 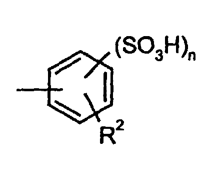 oder -Y-SO₃H
n = 1 oder 2
Y = geradkettiges oder verzweigtes Alkyl, Alkenyl oder Alkinyl,
R² = H, Alkyl, Alkoxy oder Halogen.

9. Wasserbehandlungsmittel enthaltend zu 0,5 bis 15 Gew.-% ein Polyasparaginsäurederivat mit wiederkehrenden Einheiten der Formel 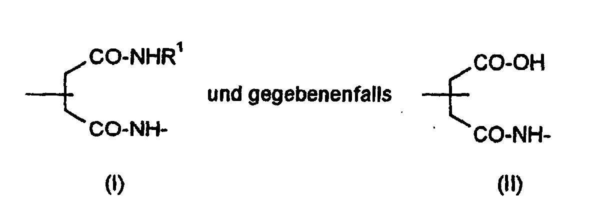 mit
R¹ = 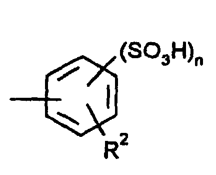 oder -Y-SO₃H
n = 1 oder 2
Y = geradkettiges oder verzweigtes Alkyl, Alkenyl oder Alkinyl,
R² = H, Alkyl, Alkoxy oder Halogen.

10. Verwendung von Verbindungen mit wiederkehrenden Einheiten der Formel 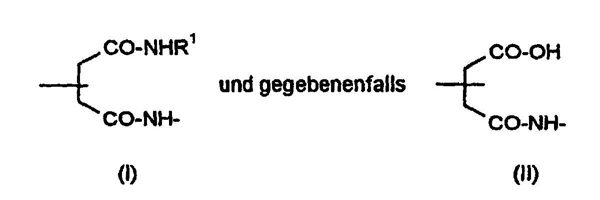 mit
R¹ = 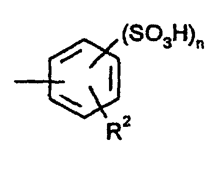 oder -Y-SO₃H
n = 1 oder 2
Y = geradkettiges oder verzweigtes Alkyl, Alkenyl oder Alkinyl,
R² = H, Alkyl, Alkoxy oder Halogen
als Waschmittelzusatz.

11. Verwendung von Verbindungen mit wiederkehrenden Einheiten der Formel 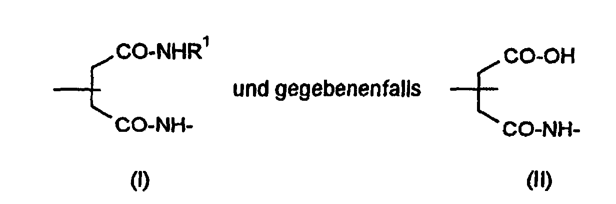 mit
R¹ = 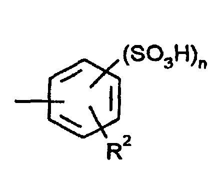 oder -Y-SO₃H
n = 1 oder 2
Y = geradkettiges oder verzweigtes Alkyl, Alkenyl oder Alkinyl,
R² = H, Alkyl, Alkoxy oder Halogen
zur Wasserbehandlung.

12. Verfahren zur Herstellung von Verbindungen mit wiederkehrenden Einheiten der Formel 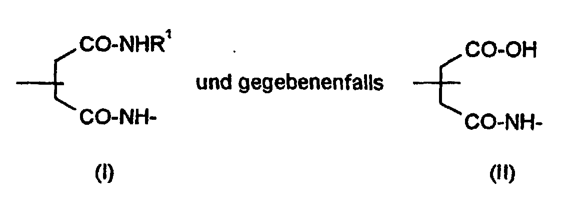 mit
R¹ = 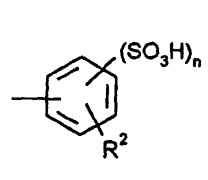 oder -Y-SO₃H
n = 1 oder 2
Y = geradkettiges oder verzweigtes Alkyl, Alkenyl oder Alkinyl,
R² = H, Alkyl, Alkoxy oder Halogen
durch Umsetzung von Polysuccinimid mit einem Amin R¹ NH₂ mit
R¹ = 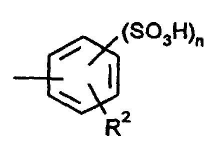 oder -Y-SO₃H.

13. Verwendung der Polymere gemäß Anspruch 1 in der Sekundärförderung im Erdölbereich.

## Claims

1. Polymers containing repeating aspartyl units of the structure 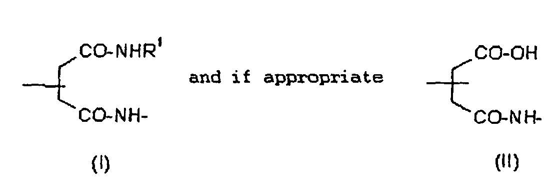 where
R¹ = 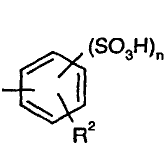 or -Y-SO₃H
n = 1 or 2
Y = straight-chain or branched alkyl, alkenyl or alkynyl,
R² = H, alkyl, alkoxy or halogen
or a salt thereof, for the case where R¹ = -CH₂-CH₂-SO₃H or a salt thereof, the molar ratio of the structures II/I being greater than 1.

2. Polymers according to Claim 1, **characterized in that**
R¹ =

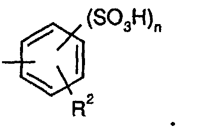

3. Polymers according to Claim 1, **characterized in that**
R¹ = -Y-SO₃H,
where Y denotes methylene, alkenyl, alkynyl or alkyl having at least 3 C atoms.

4. Polymers according to at least one of the preceding claims, **characterized in that** the repeating units (I) and (II) are present at least 50% as β-units.

5. Polymers according to at least one of the preceding claims, **characterized in that** the molar ratio of the repeating units (I) to (II) is between 0.1:99.9 and 100:0.

6. Polymers according to at least one of the preceding claims, **characterized in that** the sum of the units I and II is 10 to 1000.

7. Composition which is suitable for water treatment or as a laundry detergent additive and contains a polyaspartic acid derivative, the derivative containing repeating aspartyl units of the structures (I) and if appropriate (II) 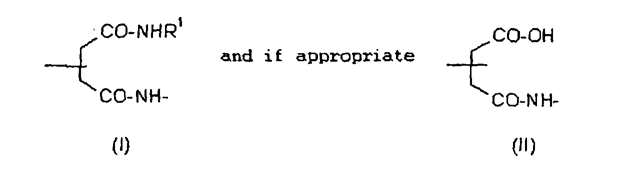 where
R¹ = 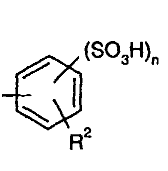 or -Y-SO₃H
n = 1 or 2
Y = straight-chain or branched alkyl, alkenyl or alkynyl,
R² = H, alkyl, alkoxy or halogen.

8. Laundry detergent and cleaner containing 0.1 to 3.0% by weight of a polymer having repeating units of the formulae 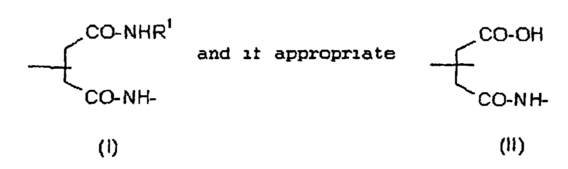 where
R¹ = 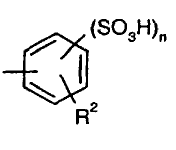 or -Y-SO₃H
n = 1 or 2
Y = straight-chain or branched alkyl, alkenyl or alkynyl,
R² = H, alkyl, alkoxy or halogen.

9. Water-treatment composition containing 0.5 to 15% by weight of a polyaspartic acid derivative having repeating units of the formula 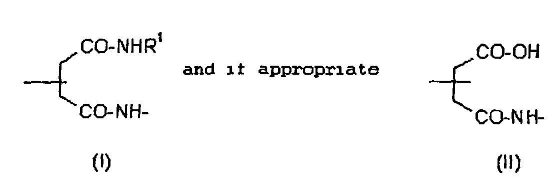 where
R¹ = 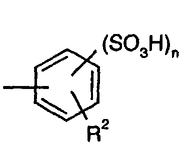 or -Y-SO₃H
n = 1 or 2
Y = straight-chain or branched alkyl, alkenyl or alkynyl,
R² = H, alkyl, alkoxy or halogen.

10. Use of compounds having repeating units of the formula 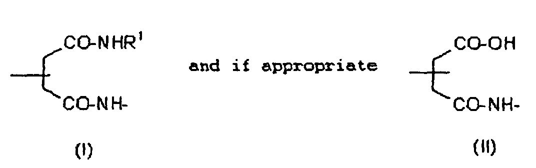 where
R¹ = 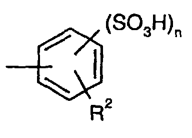 or -Y-SO₃H
n = 1 or 2
Y = straight-chain or branched alkyl, alkenyl or alkynyl,
R² = H, alkyl, alkoxy or halogen
as a laundry detergent additive.

11. Use of compounds having repeating units of the formula 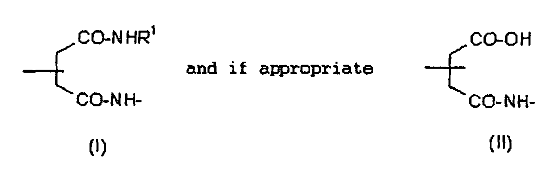 where
R¹ = 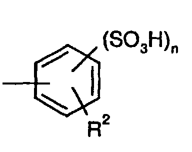 or -Y-SO₃H
n = 1 or 2
Y = straight-chain or branched alkyl, alkenyl or alkynyl,
R² = H, alkyl, alkoxy or halogen
for water treatment.

12. Process for the preparation of compounds having repeating units of the formula 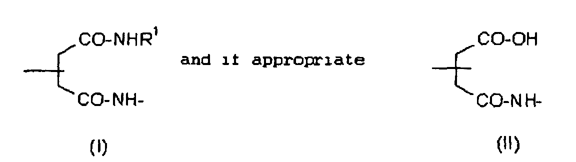 where
R¹ = 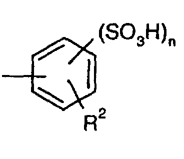 or -Y-SO₃H
n = 1 or 2
Y = straight-chain or branched alkyl, alkenyl or alkynyl,
R² = H, alkyl, alkoxy or halogen
by reacting polysuccinimide with an amine R¹-NH₂ where R¹ = 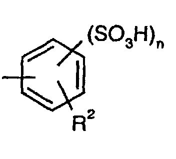 or -Y-SO₃H.

13. Use of the polymers according to Claim 1 in secondary extraction in the mineral oil sector.

## Revendications

1. Polymères contenant des motifs aspartyles répétés de structure 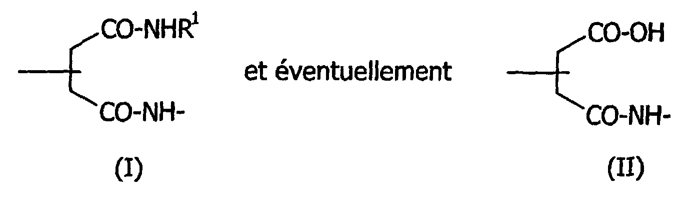 dans lesquels
R¹ = 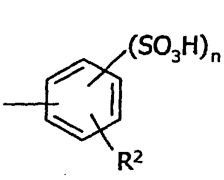 ou -Y-SO₃H
n = 1 ou 2,
Y = groupe alkyle, alcényle ou alcynyle à chaîne droite ou ramifiée,
R² = H, groupe alkyle, alcoxy ou halogène,
ou leurs sels, étant précisé que lorsque R¹ = -CH₂-CH₂-SO₃H, éventuellement à l'état de sel, le rapport molaire des structures II/I est supérieur à 1.

2. Polymères selon la revendication 1, **caractérisés en ce que**
R¹ =

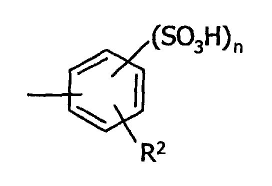

3. Polymères selon la revendication 1, **caractérisés en ce que**
R¹ = -Y-SO₃H,
Y représentant un groupe méthylène, alcényle, alcynyle ou alkyle à au moins 3 atomes de carbone.

4. Polymères selon au moins l'une des revendications qui précèdent, **caractérisés en ce que** les motifs répétés (I) et (II) sont pour au moins 50 % sous la forme de motifs β.

5. Polymères selon au moins l'une des revendications qui précèdent, **caractérisés en ce que** le rapport molaire entre les motifs répétés (I) et (II) va de 0,1:99,9 à 100:0.

6. Polymères selon au moins l'une des revendications qui précèdent, **caractérisés en ce que** la somme des motifs I et II va de 10 à 1 000.

7. Composition convenant à l'utilisation pour le traitement des eaux ou en tant qu'additifs à des produits de lavage et contenant un dérivé de l'acide polyaspartique, ce dérivé contenant des motifs arpartyles répétés de structures (I) et le cas échéant (II) 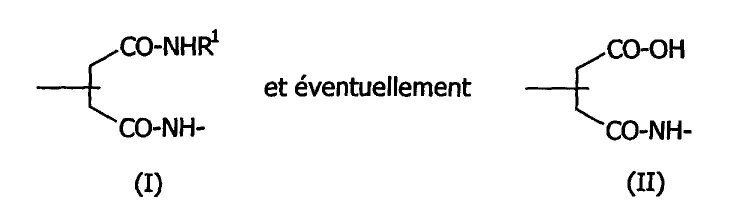 dans lesquels
R¹ = 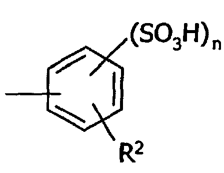 ou -Y-SO₃H
n= 1 ou 2,
Y = groupe alkyle, alcényle ou alcynyle à chaîne droite ou ramifiée,
R² = H, alkyle, alcoxy ou halogène.

8. Produit de lavage et de nettoyage contenant 0,1 à 3,0 % en poids d'un polymère à motifs répétés de formules 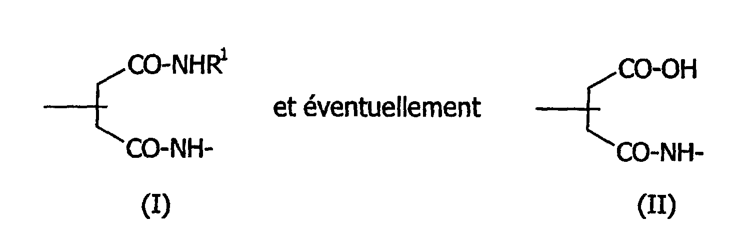 dans lesquelles
R¹ = 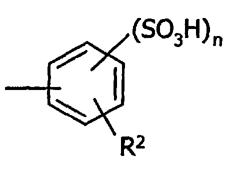 ou -Y-SO₃H
n = 1 ou 2,
Y = groupe alkyle, alcényle ou alcynyle à chaîne droite ou ramifiée,
R² = H, alkyle, alcoxy ou halogène.

9. Produit pour le traitement des eaux contenant 0,5 à 15 % en poids d'un dérivé de l'acide polyaspartique à motifs répétés de formules 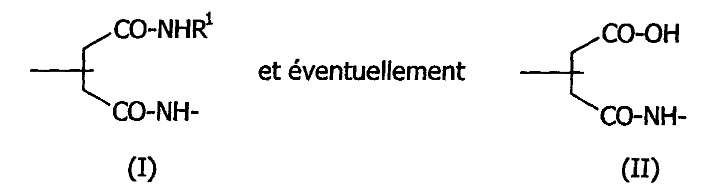 dans lesquelles
R¹ = 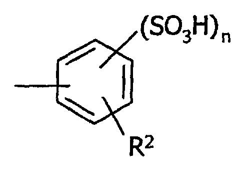 ou Y-SO₃H
n = 1 ou 2,
Y = groupe alkyle, alcényle ou alcynyle à chaîne droite ou ramifiée,
R² = H, alkyle, alcoxy ou halogène.

10. Utilisation de composés à motifs répétés de formules 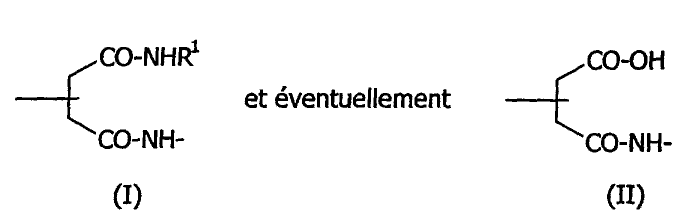 dans lesquelles
R¹ = 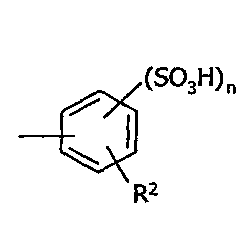 ou -Y-SO₃H
n = 1 ou 2,
Y = groupe alkyle, alcényle ou alcynyle à chaîne droite ou ramifiée,
R² = H, alkyle, alcoxy ou halogène
en tant qu'additifs à des produits de lavage.

11. Utilisation de composés à motifs répétés de formules 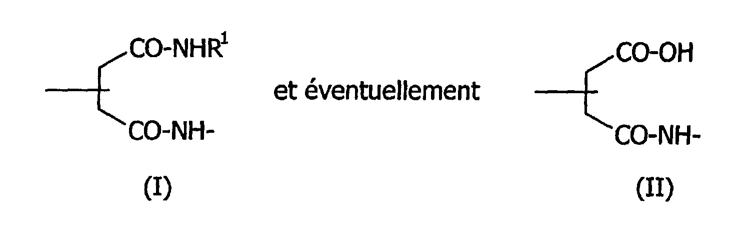 dans lesquelles
R¹ = 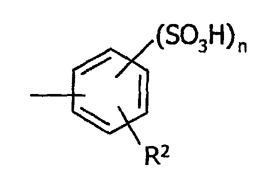 ou -Y-SO₃H
n = 1 ou 2,
Y = groupe alkyle, alcényle ou alcynyle à chaîne droite ou ramifiée,
R² = H, alkyle, alcoxy ou halogène,
pour le traitement des eaux.

12. Procédé pour la préparation de composés à motifs répétés de formules 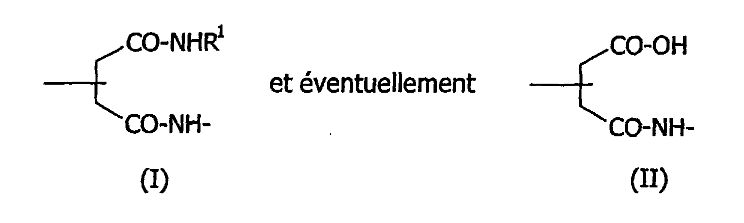 dans lesquelles
R¹ = 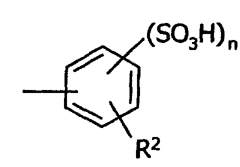 ou -Y-SO₃H
n = 1 ou 2,
Y = groupe alkyle, alcényle ou alcynyle à chaîne droite ou ramifiée,
R² = H, alkyle, alcoxy ou halogène
par réaction d'un polysuccinimide avec aminé R¹ NH² pour laquelle
R¹ = 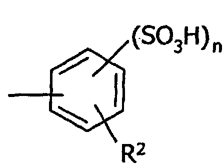 ou -Y-SO₃H

13. Utilisation des polymères selon la revendication 1, à l'extraction secondaire du pétrole.
